# EUROPÄISCHE PATENTSCHRIFT

(11) **EP 1 960 708 B1**
(45) Veröffentlichungstag und Bekanntmachung des Hinweises auf die Patenterteilung: **28.09.2016**
(21) Anmeldenummer: 06829416.4
(22) Anmeldetag: 04.12.2006
(51) Int. Cl.: F21S 8/00, G02B 6/00

(54) **FLÄCHENLEUCHTE**
TWO-DIMENSIONAL LUMINAIRE
LAMPE A LUMIERE DIFFUSE

(30) Priorität: 06.12.2005 DE 102005059198
(43) Veröffentlichungstag der Anmeldung: 27.08.2008
(73) Patentinhaber: ARNOLD & RICHTER CINE TECHNIK GMBH & CO. BETRIEBS KG, 80799 München (DE)
(72) Erfinder: MELZNER, Erwin, 83112 Frasdorf (DE)
(74) Vertreter: Maikowski & Ninnemann Patentanwälte Partnerschaft mbB
(86) Internationale Anmeldenummer: PCT/EP2006/011805
(87) Internationale Veröffentlichungsnummer: WO 2007/065698

(56) Entgegenhaltungen:
- EP-A- 1 376 708
- WO-A-90/13885
- DE-U1-202005 012 652
- GB-A- 2 405 461
- JP-A- 2000 011 724
- JP-U- H0 636 001
- US-A1- 2005 162 850

## Beschreibung

Die Erfindung bezieht sich auf eine Flächenleuchte mit einer als Hohl-Lichtleiter ausgebildeten Leuchtkammer mit einem umlaufenden Rahmen, einer Abstrahlöffnung und einer zumindest teilweise mit Leuchtdioden bestückten Bodenplatte.

Als Leuchtdioden, Licht emittierende Dioden oder LEDs bezeichnete Leuchtmittel bieten die Möglichkeit, flache und über die Fläche homogen Licht abstrahlende Scheinwerfer herzustellen, die in größeren Bauformen als Flächenleuchten mit den Bezeichnungen "Softlight", "Filllight" oder Aufheller in allen Bereichen der professionellen Beleuchtung, als Portrait-Leuchten in unmittelbarer Umgebung einer Laufbild- oder Videokamera, in engen Räumen, wie beispielsweise Fahrzeugen und Treppenhäusern, und zum Aufbau von Leuchtwänden bei der Event- und Bühnenbeleuchtung eingesetzt werden können.

Flächenleuchten mit Leuchtdioden als Leuchtmitteln weisen unterschiedliche Bauformen auf. In einer ersten Bauform wird eine Anzahl von Leuchtdioden auf dem Boden einer als Hohl-Lichtleiter ausgebildeten Leuchtkammer angeordnet, die reflektierende Wände und eine diffus transmittierende Abdeckung aufweist. Die Leuchtdioden strahlen in den Halbraum oberhalb des Bodens der Leuchtkammer, wobei das von ihnen abgestrahlte Licht mehrfach diffus reflektiert wird und mit einem großen Halbstreuwinkel aus der Flächenleuchte austritt. Die hierbei verwendeten Leuchtdioden können unterschiedliche Streucharakteristiken aufweisen wie beispielsweise "lambertsch", "batwing" oder "side-emitting", wobei insbesondere bei der Verwendung von Side-Emitting-Leuchtdioden eine geringe Bauhöhe der Flächenleuchte erzielt werden kann.

In einer weiteren Bauform wird von einer Anzahl von auf dem Boden einer Leuchtkammer angeordneten Leuchtdioden mit Side-Emitting-Charakteristik Licht in einen die Leuchtdioden umgebenden Voll-Lichtleiter, beispielsweise einen Acrylblock, eingestrahlt, wobei die Lichtmischung innerhalb des Voll-Lichtleiters erfolgt.

In einer anderen Bauform wird eine Anzahl Leuchtdioden auf dem Innenrand eines Gehäuserahmens angeordnet, so dass das von den Leuchtdioden abgegebene Licht nach Innen in eine hohle Kammer oder insbesondere in einen Voll-Lichtleiter abgestrahlt wird.

Aus der DE 20 2004 016 637 U1 ist eine Beleuchtungseinrichtung mit einem Träger bekannt, auf dem mehrere Leuchtdioden und Steuervorrichtungen angeordnet sind, mit denen der Betriebszustand der Beleuchtungseinrichtung eingestellt wird. Als Leuchtdioden werden Hochleistungs-Leuchtdioden mit einem optischen Wirkungsgrad von wenigstens 20 Im/W eingesetzt, die insbesondere weißes Licht emittieren und als "Golden Dragon" - Leuchtdioden bezeichnet werden. Als Steuervorrichtungen werden Ansteuerelektroniken mit einem Lichtsensor eingesetzt, der die Umgebungshelligkeit misst und die Helligkeit der Leuchtdioden regelt.

Der Einsatz einer derartigen Beleuchtungseinrichtung in einer Flächenleuchte hat den Nachteil, dass die Steuervorrichtungen zusammen mit den Leuchtdioden auf dem Träger angeordnet sind und demzufolge die Licht abgebende Fläche der Beleuchtungseinrichtung verringern.

Auch die anderen, vorstehend genannten Bauformen weisen den Nachteil auf, dass die zur Ansteuerung der Leuchtdioden erforderlichen Steuerelektroniken außerhalb der Leuchtkammer angebracht werden müssen, so dass der Vorteil, mit Hilfe von Leuchtdioden Flächenleuchten geringer Bauhöhe herzustellen, dadurch eingeschränkt wird, dass die Steuerelektronik entweder unterhalb der Leuchtdioden angeordnet werden muss, um die nicht Licht abgebende Fläche möglichst klein zu halten, oder dass zur Schaffung flacher Bauformen die Leuchtdioden im Gehäuserahmen angeordnet werden müssen, was aber zu einem größeren, nicht leuchtenden Rand der Flächenleuchte führt.

Aus der GB-A-2 405 461 ist ein Leuchtpanel mit LEDs zur Erzeugung mehrfarbiger Lichteffekte bekannt, bei dem die LEDs seitlich versetzt zu einem umlaufenden Rahmen auf senkrecht von einer Bodenfläche abstehenden Schaltplatinen angeordnet und durch Diffusionsstreifen zu einer lichtdurchlässigen Diffusorplatte abgedeckt und zur möglichst gleichförmigen Lichtabgabe so ausgerichtet sind, dass das von ihnen abgestrahlte Licht auf in der Mitte der Bodenfläche angeordnete, pyramidenförmige sowie auf der Bodenfläche angeordnete ebene Reflexionsflächen fällt, die das von den LEDs abgestrahlte Licht zur Diffusorplatte reflektieren. Die LEDs sind in Farbgruppen zusammengefasst im Leuchtpanel verteilt angeordnet und über freie Leitungsverbindungen mit einem Gleichspannungsanschluss verbunden, der mit einer externen Steuereinrichtung zur Ansteuerung der LEDs verbunden ist. Das Leuchtpanel erfordert eine externe und daher nicht autonome Ansteuerung und ist nur über eine Spannungsversorgung zur gesteuerten bzw. geregelten Lichtabgabe betreibbar.

Aus der EP-A-1 376 708 ist die Kombination einer Leuchtdioden und einer mit der Leuchtdiode zu verbindenden Linse zur Herstellung einer Side Emitting-LED bekannt, wobei die Linse einen Boden, eine Reflexionsfläche, eine erste, zu einer Mittelachse der Linse schräg ausgerichtete Brechungsfläche und eine zweite, kurvenförmig von einer Bodenfläche zur ersten Brechungsfläche verlaufende Brechungsfläche aufweist, so dass über die Bodenfläche einfallende Lichtstrahlen senkrecht zur Mittelachse der Linse und damit parallel zur Bodenfläche verlaufend abgelenkt werden.

Aus der DE 20 2005 012652 U1 ist ein Leistungs-LED-Modul mit mindestens einer Leistungs-LED, einer die LED tragenden Platine und einem zur Kühlung der LED vorgesehenen Kühlkörper aus Metall bekannt. Zur zuverlässigen Abführung der von der LED im Betrieb erzeugten Wärme durch den Kühlkörper ist die Platine in einem unter der LED liegenden Bereich mit einem Durchgangsloch versehen, in das der Kühlkörper an einer rückseitigen Kontaktfläche der LED anliegend eingesetzt ist.

Aus der WO 90/13885 A ist ein Flächendisplay zur Ausleuchtung von Hintergrundflächen mit einem plattenförmigen Bauteil aus einem transparenten, lichtdurchlässigen Material und einem daran angeordneten Trägerkörper zur Aufnahme von als Leuchtdioden ausgebildeten Lichtquellen bekannt, die in das plattenförmige Bauteil abstrahlen und dieses ausleuchten. Zur Verringerung der Bauhöhe und schattenfreien Ausleuchtung des Bauteils ist der Trägerkörper als Platine ausgebildet, auf der mindestens zwei Leuchtdiodenchips mit Bondung unmittelbar aufgebracht sind und auf der Anschlüsse zur Verschaltung der Leuchtdiodenchips vorgesehen sind.

Zur Verbesserung der Reflexion und Vermeidung von Schattenbildung bei der Lichteinstrahlung der LED-Chips weist die Bodenfläche des Bauteils eine aus Dreiecksflächen zusammengesetzte Prismengestaltung oder eine Siebdruckgestaltung auf und das Bauteil ist als hohlspiegelartiger Körper oder als trichterartiger Rahmen mit abgeschrägten inneren Flächen und mit einer Aufrauung versehen, durch die das von den LED-Chips abgegebene Licht von unten auf die in der Licht abgebenden Fläche des Flächendisplays angeordnete Diffusorfolie reflektiert wird.

Aus der JP 2000011724 A ist eine Einrichtung zur Hintergrundbeleuchtung einer Flüssigkristallanzeige bekannt, die ein quaderförmiges Gehäuse aufweist, dessen Lichtaustrittsseite mit einer Lichtstreueinrichtung verbunden ist und in dessen Innenraum beabstandet zur Lichtstreueinrichtung eine Lichtquelle angeordnet ist. Von dem der Lichtquelle benachbarten Boden des Gehäuses zur diagonal entgegengesetzten Ecke des Gehäuses verläuft ein gebogener Reflektor, so dass zwischen der Rückseite des Reflektors und dem Gehäuseboden ein Freiraum zur Aufnahme eines Schaltkreises gebildet wird.

Ein weiteres Problem bei der Herstellung von Flächenleuchten mit geringer Bauhöhe bei gleichzeitig größtmöglicher Licht abgebender Fläche besteht darin, dass die von den Leuchtdioden abgegebene Wärme für einen dauerhaft stabilen Betrieb zuverlässig abgeführt werden muss. Dies trifft insbesondere bei Hochleistungs-Leuchtdioden zu, die in einen die Abstrahloptik enthaltenden thermoplastischen Körper eingebettet sind.

Aufgabe der vorliegenden Erfindung ist es, eine Leuchtdioden enthaltende Flächenleuchte geringstmöglicher Bauhöhe mit größtmöglicher Licht abgebender Fläche und optimaler Kühlung der Leuchtdioden und der die Leuchtdioden ansteuernden Steuerelektronik anzugeben.

Diese Aufgabe wird erfindungsgemäß durch die Merkmale des Anspruchs 1 gelöst.

Die erfindungsgemäße Lösung stellt eine Flächenleuchte minimaler Bauhöhe mit maximaler Licht abgebender Fläche und optimaler Kühlung der als Leuchtmittel eingesetzten Leuchtdioden der Flächenleuchte sowie der Steuerelektronik zur Ansteuerung der Leuchtdioden bereit.

Die konstruktive Ausgestaltung der Leuchtkammer der erfindungsgemäßen Flächenleuchte mit zwischen dem umlaufenden Rahmen und der Bodenplatte angeordneten Schrägflächen ermöglicht es, die Steuerelektronik(en) zur Ansteuerung der Leuchtdioden unterhalb der Schrägflächen und insbesondere in einem durch die Schrägflächen, die Bodenplatte und den umlaufenden Rahmen gebildeten Hohlraum anzuordnen, so dass keine der Lichterzeugung bzw. Lichtreflektion dienende Fläche beansprucht wird und damit auch keine nicht leuchtenden Flächen erzeugt werden. Weiterhin wird dadurch die Voraussetzung für eine optimale Kühlung der Steuerelektronik(en) und der Leuchtdioden gewährleistet.

Die Einstellung der Neigung und Krümmung der zwischen dem umlaufenden Rahmen und der Bodenplatte der Leuchtkammer angeordneten Schrägflächen ergibt trotz Verkleinerung des Reflexionsraums der Leuchtkammer eine sehr gute Licht- und Farbverteilung.

Durch die Anordnung einer Anzahl horizontal abstrahlender Leuchtdioden auf der Bodenplatte, deren maximale Lichtabstrahlung parallel zur Bodenplatte, d.h. horizontal oder unter einem spitzen Winkel von beispielsweise 20° gegenüber der Horizontalen bzw. der Bodenplatte verlaufend gerichtet ist, wird eine Flächenleuchte mit minimaler Bauhöhe bei maximaler Licht abgebender Fläche und in Verbindung mit den in der Leuchtkammer angeordneten Schrägflächen eine sehr gute Licht- und Farbverteilung erzielt.

Um eine bessere Lichtverteilung zu erreichen, können die Schrägflächen konkav oder konvex gewölbt und/oder gerippt oder gefaltet sein.

Vorzugsweise ist die Leuchtkammer als diffus reflektierender Hohl-Lichtleiter ausgebildet, so dass eine optimale Lichtverteilung auch bei geringstmöglicher Bauhöhe der Leuchtkammer zur Erzielung einer größtmöglichen leuchtenden Fläche bei gleichmäßiger Lichtverteilung gewährleistet ist.

In einer bevorzugten Ausführungsform der Erfindung werden als Leuchtdioden Side-Emitting-LEDs eingesetzt, deren maximale Lichtabstrahlung aufgrund ihrer Bauform horizontal, das heißt parallel zur Bodenplatte, gerichtet oder unter einem spitzen Winkel zur Horizontalen oder Bodenplatte geneigt ist.

Die Kühlung insbesondere der Leuchtdioden kann dadurch erfolgen, dass eine gut Wärme leitende Platine, wie beispielsweise ein Metallkern- oder Keramikboard, mit Leuchtdioden bestückt wird, wobei die Platine direkt auf einem Kühlkörper befestigt wird.

Alternativ erfolgt die Bestückung einer Platine aus beliebigem Leiterplattenmaterial mit Leuchtdioden, unter denen sich Durchbrüche bzw. Löcher befinden, durch die als Finger ausgebildete Teile eines Kühlkörpers direkt bis zu den Böden bzw. Kühlflächen der Leuchtdioden geführt und gut Wärme leitend mit den Böden oder Kühlflächen der Leuchtdioden verbunden werden.

Diese Art der Bestückung der Leuchtkammer mit Leuchtdioden gewährleistet eine optimale Kühlung auch von Hochleistungs-Leuchtdioden, so dass zur Abgabe einer maximalen Lichtleistung auch eine größtmögliche Bestückungsdichte erfolgen kann.

Eine weitere Alternative, die zusätzliche Vorteile bezüglich einer kostengünstigen Fertigung und der Möglichkeit einer einfachen, elektrischen Isolation der Kühlflächen der Leuchtdioden bietet, ist dadurch gekennzeichnet, dass in der den Leuchtdioden zugewandten Fläche des Kühlkörpers Vertiefungen angeordnet sind, in die Bolzen eingesetzt und Wärme leitend mit dem Boden oder der Kühlfläche der Leuchtdioden verbunden sind, wobei die Bolzen in die Vertiefungen des Kühlkörpers eingepresst sind und aus Metall, vorzugsweise aus einem Metall mit höherer Wärmeleitfähigkeit als Aluminium, insbesondere aus Kupfer, bestehen.

Wenn eine elektrische Isolierung erforderlich ist, insbesondere bei einer leitenden Verbindung der Kühlflächen der Leuchtdioden mit der Anode oder Katode, kann diese durch Einfügen einer Schicht aus elektrisch isolierendem, aber gut Wärme leitendem Material zwischen der Platine und dem Kühlkörper oder zwischen den Leuchtdioden und der Platine, insbesondere zwischen den Kühlflächen der Leuchtdioden und den durch die Durchbrüche ragenden Teilen des Kühlkörpers oder den Bolzen, erfolgen. Dabei kann es sich um aufgesprühte, aufgedampfte oder aufgedruckte Schutzschichten wie z.B. Lackfarben oder um sog. "Wärmeleitpads" oder "Wärmeleitkleber" handeln.

Bei einer Verbindung des Bodens oder der Kühlfläche der Leuchtdioden mit einem in Vertiefungen des Kühlkörpers eingesetzten Bolzen können Bolzen verwendet werden, die aus einer sehr gut Wärme leitenden und elektrisch isolierenden Keramik bestehen.

Zum Schutz der Leuchtkammer und insbesondere der Leuchtdioden sowie zur weiteren Vergleichmäßigung des abgestrahlten Lichts kann die Abstrahlöffnung mit einer lichtdurchlässigen Abdeckung in Form beispielsweise einer transparenten Abdeckung, gefrosteten Scheibe, Linse oder dergleichen versehen werden.

Anhand von Ausführungsbeispielen sollen der Gegenstand der Erfindung sowie weitere Merkmale und Vorteile der erfindungsgemäßen Flächenleuchte beschrieben werden. Es zeigen:
- Fig. 1: eine schematisch-perspektivische Ansicht einer Flächenleuchte mit mehreren auf einer Bodenplatte angeordneten Leuchtdioden und einer Leuchtkammer mit umlaufendem Rahmen und Schrägflächen;
- Fig. 2: eine Draufsicht auf die Flächenleuchte gemäß Fig. 1;
- Fig. 3: einen Schnitt durch die Flächenleuchte entlang der Linie A-A gemäß Fig. 2;
- Fig. 4: einen Längsschnitt durch eine Anordnung einer Leuchtdiode mit Side-Emitting-Optik auf einer mit einem Kühlkörper verbundenen Metallkern-Leiterplatte;

- Fig. 5: einen Längsschnitt durch eine Anordnung einer Leuchtdiode mit Side-Emitting-Optik auf einer Leiterplatte mit einem Durchbruch zur Kontaktierung des Bodens oder der Kühlfläche einer Leuchtdiode und mit einem durch den Durchbruch geführten Finger des Kühlkörpers und
- Fig. 6: einen Längsschnitt durch eine Anordnung einer Leuchtdiode mit Side-Emitting-Optik auf einer Leiterplatte mit einem Durchbruch zur Kontaktierung des Bodens oder der Kühlfläche einer Leuchtdiode und mit einem in eine Vertiefung des Kühlkörpers eingesetzten, Wärme leitenden Bolzen.

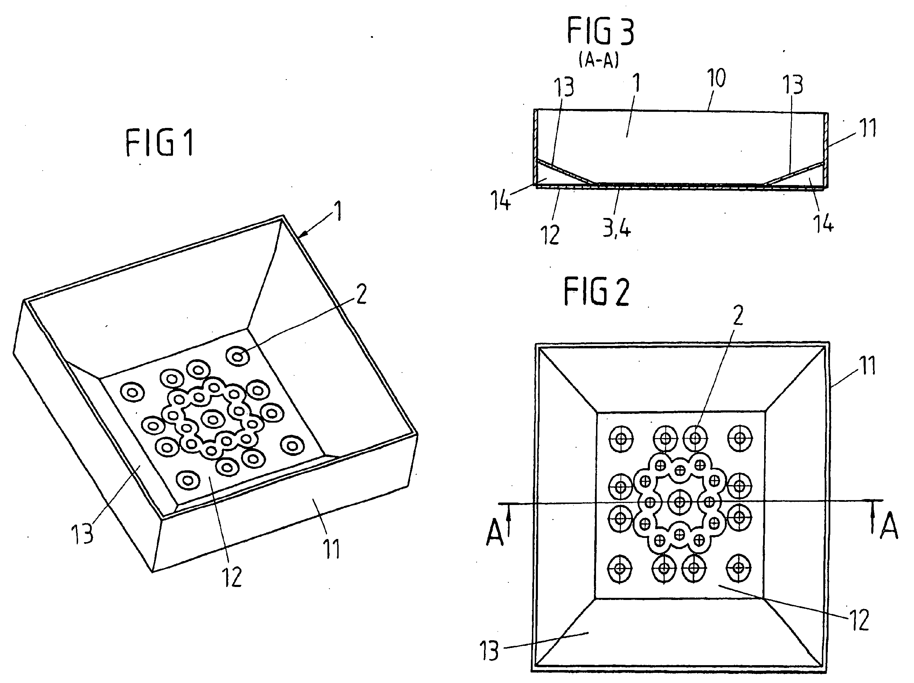

Die in den Fig. 1 bis 3 in einer schematisch-perspektivischen Ansicht, einer Draufsicht und einem Längsschnitt dargestellte Flächenleuchte setzt sich aus einer als Hohl-Lichtleiter ausgebildeten Leuchtkammer 1 und mehreren nach einem vorgebbaren Verteilungsmuster in der Leuchtkammer 1 angeordneten Leuchtdioden 2 zusammen. Die Leuchtkammer 1 enthält einen umlaufenden Rahmen 11 und eine Bodenplatte 12, auf der eine Platine 3 mit Leuchtdioden 2 angeordnet und mit ihrer Licht abgebenden Optik auf eine Abstrahlöffnung 10 der Leuchtkammer 1 ausgerichtet sind. Der Randbereich der Bodenplatte 12 und ein an die Bodenplatte 12 angrenzender Bereich des umlaufenden Rahmens 11 sind durch Schrägflächen 13 überbrückt, so dass zwischen dem unteren Bereich des umlaufenden Rahmens 11, dem Randbereich der Bodenplatte 12 und den Schrägflächen 13 ein Hohlraum 14 ausgebildet wird.

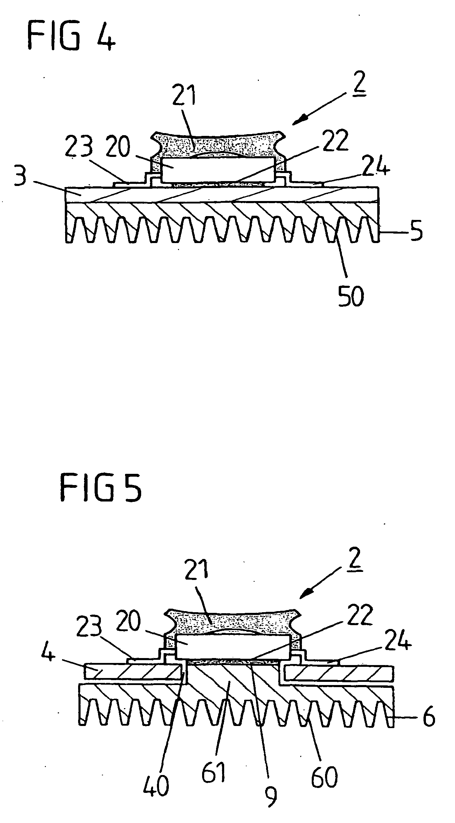

Als Leuchtdioden 2 können beliebige LEDs, vorzugsweise aber Side-Emitting-LEDs, eingesetzt werden, die gemäß den Fig. 4 und 5 aus einer LED 20 und einer Side-Emitting-Optik 21 mit einem Linsenhalter aus transparentem Polykarbonat zur korrekten Anordnung von LED 20 und Linse besteht und eine Kühlfläche 22 zur Hitzeableitung aufweist, die eine optimale mechanische Festigkeit gewährleistet. Eine derartige Side-Emitting-LED wird beispielsweise unter der Bezeichnung "Golden Dragon LED" von der Firma OSRAM angeboten. Die Side-Emitting-LED wird mit unterschiedlichen Abstrahlwinkeln hergestellt, das heißt, das Maximum der Lichtabstrahlung der Side-Emitting-LED horizontal oder ist in einem Abstrahlwinkel von beispielsweise bis zu 35° gegenüber der Horizontalen geneigt. Die hohe Effizienz einer derartigen Side-Emitting-LED von bis zu 85% des gesamten Lichtstroms einer LED ermöglicht es, Standardglühlampen und Halogen-Lichtquellen in ihrem Lichtdesign zu ersetzen. und eignet sich in besonderer Weise für den Einsatz in einer flach bauenden Flächenleuchte.

Für den vorliegenden Anwendungsfall können horizontal, das heißt parallel zur Bodenplatte, abstrahlende Side-Emitting-LEDs bzw. unter einem spitzen Winkel gegenüber der Horizontalen, beispielsweise mit einem Abstrahlwinkel von ca. 20° gegenüber der Horizontalen, abstrahlende Side-Emitting-LEDs eingesetzt werden. Insbesondere wird mit exakt horizontal abstrahlenden Side-Emitting-LEDs in Verbindung mit in der Leuchtkammer 1 angeordneten Schrägflächen 13 eine sehr gute Licht- und Farbverteilung der Lichtabstrahlung der Flächenleuchte erzielt.

Zur Optimierung der Lichtverteilung in der als Hohl-Lichtleiter ausgebildeten Leuchtkammer 1 kann die Schrägfläche 13 anstelle einer ebenen Fläche auch aus einer konkav oder konvex gewölbten Fläche bestehen oder alternativ oder zusätzlich gerippt oder gefaltet sein, so dass eine optimale Lichtstreuung geschaffen wird. Die Neigung oder Krümmung der Schrägflächen 13 gegenüber der Bodenplatte 12 wird dabei so eingestellt, dass sich trotz der Verkleinerung des Reflexionsraums der Leuchtkammer 1 eine sehr gute Licht- und Farbverteilung ergibt.

Eine oder mehrere Steuerelektronik(en) zur Ansteuerung der Leuchtdioden 2 wird bzw. werden vorzugsweise in den durch den umlaufenden Rahmen 11, die Bodenplatte 12 und die Schrägflächen 13 gebildeten Hohlräumen 14 angeordnet, so dass eine Trennung zwischen dem Hohl-Lichtleiter und der Steuerung bzw. Stromversorgung der Leuchtdioden 2 geschaffen wird, bei der weder die Licht abgebenden noch die Licht reflektierenden Flächen der Leuchtkammer 1 durch diese Zusatzeinrichtungen beeinträchtigt werden. Gleichzeitig wird damit eine kompakte Bauform der Flächenleuchte gewährleistet, deren Gehäuse ausschließlich durch den umlaufenden Rahmen 11 und die Bodenplatte 12 bestimmt wird. Zur weiteren Optimierung der Lichtstreuung und/oder zum Schutz der innerhalb der Leuchtkammer 1 angeordneten Leuchtdioden 2 kann die Abstrahlöffnung 10 mit einer transparenten oder transluzenten Abdeckung wie beispielsweise einem Sicherheitsglas, einer gefrosteten Scheibe, Linse oder dergleichen abgedeckt werden.

Die erforderliche Kühlung der in der Leuchtkammer 1 der erfindungsgemäßen Flächenleuchte eingesetzten Leuchtdioden 2, die insbesondere als Side-Emitting-LEDs ausgebildet sind, kann gemäß den schematischen Darstellungen der Fig. 4 und 5 erfolgen.

Fig. 4 zeigt eine Standardlösung, bei der eine aus einer LED 20, einer Side-Emitting-Optik 21 und einer Kühlfläche 22 zusammengesetzte Leuchtdiode 2 auf einer als Metallkern-Leiterplatte ausgebildeten Platine 3 angeordnet und über Anschlussleitungen 23, 24 mit Leitungszügen auf der Metallkern-Leiterplatte 3 verbunden ist. Die Kühlfläche 22 der LED 20 ist in gut Wärme leitendem Kontakt mit der ebenfalls gut Wärme leitenden Metallkern-Leiterplatte 3 verbunden, die auf der der Leuchtdiode 2 entgegen gesetzten Seite mit einem Kühlkörper 5 mit Kühlrippen 50 verbunden ist, so dass die von der LED 20 abgegebene Wärme über die Kühlfläche 22, die gut Wärme leitende Metallkern-Leiterplatte 3 an den Kühlkörper 5 abgegeben und über dessen Kühlrippen 50 abgestrahlt wird.

Die in Fig. 4 dargestellte Standardlösung ermöglicht es, auf der Metallkern-Leiterplatte 3 eine Vielzahl Leuchtdioden 2 unmittelbar nebeneinander oder in beliebigen Abständen und Konfigurationen anzuordnen, um ein gewünschtes Abstrahlmuster herzustellen.

In Fig. 5 ist eine Variante dargestellt, bei der die Leuchtdiode 2 auf einer beliebigen Leiterplatte oder Platine 4 angeordnet und ebenfalls aus einer LED 20, einer Side-Emitting-Optik 21, einer Kühlfläche 22 und Anschlussleitungen 23, 24 zusammengesetzt ist, die mit Leitungszügen auf der Leiterplatte 4 verbunden sind. Unterhalb der LED 20 der Leuchtdiode 2 weist die Leiterplatte 4 einen Durchbruch 40 auf, durch den ein Finger 61 eines auf der der Leuchtdiode 2 gegenüberliegenden Seite der Leiterplatte 4 angeordneten Kühlkörper 6 ragt und mit der Kühlfläche 22 der Leuchtdiode 2 thermisch verbunden ist. Die von der LED 20 abgegebene Wärme wird somit über die Kühlfläche 22 und den Finger 61 des Kühlkörpers 6 an Kühlrippen 60 weitergeleitet, die die von der Leuchtdiode 2 abgegebene Wärme an die Umgebung abstrahlen.

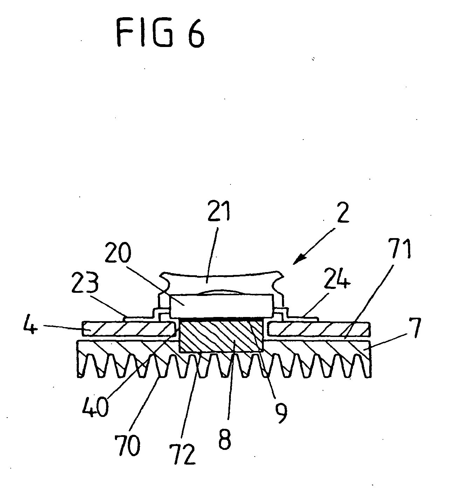

In Fig. 6 ist eine weitere Variante dargestellt, bei der die Leuchtdiode 2 ebenfalls auf einer beliebigen Leiterplatte oder Platine 4 angeordnet ist und aus einer LED 20, einer Side-Emitting-Optik 21, einer Kühlfläche 22 und Anschlussleitungen 23, 24 besteht, die mit Leitungszügen auf der Leiterplatte oder Platine 4 verbunden sind. Unterhalb der LED 20 der Leuchtdiode 2 ist ein Durchbruch 40 in der Leiterplatte oder Platine 4 vorgesehen, durch den ein Bolzen 8 ragt und mit der Kühlfläche 22 der Leuchtdiode 2 gut Wärme leitend verbunden ist. Der Bolzen 8 ist in eine Senkung 72 eingepresst, die in die der Leiterplatte 4 zugewandte Oberfläche 71 eines Kühlkörpers 7 eingefräst ist. Der Bolzen 8 besteht in einer ersten Ausführungsform aus Metall, insbesondere aus einem Metall mit einer höheren Wärmeleitfähigkeit als Aluminium, insbesondere aus Kupfer, um die Wärme optimal von der LED 20 ab- und in den Kühlkörper 7 einzuleiten, von wo aus die Wärme an Kühlrippen 70 des Kühlkörpers 7 weitergeleitet und an die Umgebung abgestrahlt wird.

Wenn eine elektrische Isolierung erforderlich ist, insbesondere bei einer leitenden Verbindung der Kühlflächen der Leuchtdioden mit der Anode oder Katode, kann diese durch Einfügen einer Schicht 9 aus elektrisch isolierendem, aber gut Wärme leitendem Material zwischen der Platine 3 und dem Kühlkörper 5 oder zwischen den Leuchtdioden und der Platine, insbesondere zwischen den Kühlflächen der Leuchtdioden 2 und den durch die Durchbrüche ragenden Teilen 61 des Kühlkörpers 6 oder den Bolzen 8, erfolgen. Die isolierende Schicht 9 kann aus aufgesprühten, aufgedampften oder aufgedruckten Schutzschichten wie z.B. Lackfarben oder aus isolierenden Wärmeleitklebstoffen oder sog. "Wärmeleitpads" bestehen.

Anstelle einer Anordnung einer isolierenden Schicht 9 zwischen dem Bolzen 8 und der Kühlfläche 22 der Leuchtdiode 2 kann ein Bolzen in die Vertiefung 72 des Kühlkörpers 7 eingepresst werden, der aus einer sehr gut Wärme leitenden, elektrisch isolierenden Keramik besteht.

Bei einer Vielzahl von nach einem beliebigen Muster angeordneten Leuchtdioden 2 sind eine der Anzahl der Leuchtdioden 2 entsprechende Anzahl von Durchbrüchen 40 in der Leiterplatte 4 vorgesehen, durch die eine entsprechende Anzahl Finger 61 des Kühlkörpers 6 oder Bolzen 8 ragt und gut Wärme leitend und gegebenenfalls elektrisch isolierend mit den Kühlflächen 22 der Leuchtdioden 2 verbunden ist.

In einer ersten konkreten Ausführungsform ist eine Anzahl von Leuchtdioden 2 gemäß den Fig.1 bis 3 auf einer Platine 3 bzw. 4 an der Bodenplatte 12 einer Leuchtkammer 1 angeordnet und auf der Außenseite der Bodenplatte 12 ein Kühlkörper 6 befestigt, der mit einer der Anzahl Leuchtdioden 2 entsprechenden Anzahl von Fingern 61 durch Durchbrüche der Bodenplatte 12 bzw. der Platine 4 greift und in gutem thermischen Kontakt mit den Kühlflächen 22 der Leuchtdioden 2 steht. Die Kühlrippen 60 des Kühlkörpers 6 stehen somit von der Bodenfläche der Leuchtkammer 1 zur Außenseite ab, so dass eine optimale Wärmeabgabe an die Umgebung der Flächenleuchte gewährleistet ist.

In einer zweiten konkreten Ausführungsform ist eine Anzahl von Leuchtdioden 2 gemäß den Fig. 1 bis 3 auf einer Platine bzw. Leiterplatte 4 an der Bodenplatte 12 einer Leuchtkammer 1 angeordnet und an der Außenseite der Platine 4 ein Kühlkörper 7 befestigt, in dessen der Platine 4 zugewandte Oberfläche 71 Senkungen bzw. Vertiefungen 72 eingefräst sind, in die Bolzen 8 aus Kupfer eingepresst sind, über die die von den Leuchtdioden 2 abgegebene Wärme in den Kühlkörper 7 abgeleitet wird, von dem die von den Leuchtdioden 2 abgegebene Wärme an die Umgebung der Flächenleuchte abgestrahlt wird. Zur elektrischen Isolierung ist zwischen den Bolzen 8 und den Kühlflächen 22 der Leuchtdioden 2 eine elektrisch isolierende Schicht 9 vorgesehen.

In alternativer Ausführungsform ist anstelle eines Bolzens 8 aus Kupfer ein Bolzen aus einer gut Wärme leitenden, elektrisch isolierenden Keramik vorgesehen und in die Vertiefungen 72 des Kühlkörpers 7 eingepresst.

### Bezugszeichenliste

- 1: Leuchtkammer
- 2: Leuchtdioden
- 3: Platine (Metallkern-Leiterplatte)
- 4: Leiterplatte oder Platine
- 5, 6, 7: Kühlkörper
- 8: Bolzen
- 9: isolierende Schicht
- 10: Abstrahlöffnung
- 11: Umlaufender Rahmen
- 12: Bodenplatte
- 13: Schrägflächen
- 14: Hohlraum
- 20: LED
- 21: Side-Emitting-Optik
- 22: Kühlfläche
- 23, 24: Anschlussleitungen
- 40: Durchbruch
- 50: Kühlrippen
- 60: Kühlrippen
- 61: Finger
- 70: Kühlrippen
- 71: Oberfläche
- 72: Senkungen, Vertiefungen

## Patentansprüche

1. Flächenleuchte mit einer als Hohl-Lichtleiter ausgebildeten Leuchtkammer (1) mit einer Abstrahlöffnung (10), einem umlaufenden Rahmen (11), einer Bodenplatte (12) und Schrägflächen (13), die den Randbereich der Bodenplatte (12) und einen an die Bodenplatte (12) angrenzender Bereich des umlaufenden Rahmens (11) überbrücken und einen Hohlraum (14) ausbilden, in dem eine Steuerelektronik angeordnet ist, die auf der Bodenplatte (12) angeordnete Leuchtdioden (2) ansteuert, die derart ausgebildet und/oder auf der Bodenplatte (12) angeordnet sind, dass das Maximum des von den Leuchtdioden (2) abgestrahlten Lichts parallel zur Bodenplatte (12) gerichtet ist oder unter einem spitzen Winkel zur Bodenplatte (12) abgegeben wird.

2. Flächenleuchte nach Anspruch 1, **dadurch gekennzeichnet, dass** die Leuchtkammer (1) als diffus reflektierender Hohl-Lichtleiter ausgebildet ist.

3. Flächenleuchte nach Anspruch 1 oder 2, **dadurch gekennzeichnet, dass** die Leuchtdioden (2) aus Side-Emitting-LEDs bestehen.

4. Flächenleuchte nach mindestens einem der vorangehenden Ansprüche, **dadurch gekennzeichnet, dass** die Schrägflächen (13) konkav oder konvex gewölbt sind.

5. Flächenleuchte nach mindestens einem der vorangehenden Ansprüche, **dadurch gekennzeichnet, dass** die Schrägflächen (13) gerippt oder gefaltet sind.

6. Flächenleuchte nach mindestens einem der vorangehenden Ansprüche, **dadurch gekennzeichnet, dass** die Bodenplatte (12) eine Wärme leitende Platine (3) enthält oder mit einer Wärme leitende Platine (3) verbunden ist.

7. Flächenleuchte nach Anspruch 6, **dadurch gekennzeichnet, dass** die Wärme leitende Platine (3) zumindest thermisch mit einem Kühlkörper (5) verbunden ist.

8. Flächenleuchte nach Anspruch 6 oder 7, **dadurch gekennzeichnet, dass** die Wärme leitende Platine aus einem Metallkern- oder Keramikboard (3) besteht.

9. Flächenleuchte nach mindestens einem der vorangehenden Ansprüche 1 bis 5, **dadurch gekennzeichnet, dass** die Bodenplatte (12) aus einer Leiterplatte (4) besteht, in der unterhalb der Leuchtdioden (2) Durchbrüche (40) angeordnet sind.

10. Flächenleuchte nach Anspruch 9, **dadurch gekennzeichnet, dass** durch die Durchbrüche (40) Teile (61) eines Kühlkörpers (6) ragen, die Wärme leitend mit dem Boden oder Kühlflächen (22) der Leuchtdioden (2) verbunden sind.

11. Flächenleuchte nach Anspruch 9, **dadurch gekennzeichnet, dass** in der den Leuchtdioden (2) zugewandten Fläche (71) des Kühlkörpers (7) Vertiefungen (72) angeordnet sind, in die Bolzen (8) eingesetzt und Wärme leitend mit dem Boden oder der Kühlfläche (22) der Leuchtdioden (2) verbunden sind.

12. Flächenleuchte nach Anspruch 11, **dadurch gekennzeichnet, dass** die Bolzen (8) in die Vertiefungen (72) des Kühlkörpers (7) eingepresst sind.

13. Flächenleuchte nach Anspruch 13 oder 14, **dadurch gekennzeichnet, dass** die Bolzen (8) aus Metall, vorzugsweise aus einem Metall mit höherer Wärmeleitfähigkeit als Aluminium, insbesondere aus Kupfer, bestehen.

14. Flächenleuchte nach mindestens einem der vorangehenden Ansprüche 6 bis 13, **dadurch gekennzeichnet, dass** eine elektrisch isolierende, gut Wärme leitende Schicht (9) zwischen der Platine (3) und dem Kühlkörper (5) oder zwischen den Kühlflächen (22) der Leuchtdioden (2) und den durch die Durchbrüche (40) ragenden Teilen (61) des Kühlkörpers (6) oder den Bolzen (8) angeordnet ist.

15. Flächenleuchte nach Anspruch 14, **dadurch gekennzeichnet, dass** die elektrisch isolierende, gut Wärme leitende Schicht (9) aus einem elektrisch isolierenden Wärmeleitklebstoff oder einem Wärmeleitpad besteht.

16. Flächenleuchte nach Anspruch 14, **dadurch gekennzeichnet, dass** die elektrisch isolierende, gut Wärme leitende Schicht (9) aus einer aufgesprühten, aufgedampften oder aufgedruckten elektrischen Isolierschicht besteht.

17. Flächenleuchte nach mindestens einem der vorangehenden Ansprüche 11 bis 13, **dadurch gekennzeichnet, dass** die Bolzen (8) aus Wärme leitender, elektrisch isolierender Keramik bestehen.

18. Flächenleuchte nach mindestens einem der vorangehenden Ansprüche 10 bis 17, **dadurch gekennzeichnet, dass** durch die Durchbrüche (40) eine der Anzahl der Leuchtdioden (2) entsprechende Anzahl Bolzen (8) oder Teile (61) eines oder mehrerer Kühlkörper (6) ragen.

19. Flächenleuchte nach mindestens einem der vorangehenden Ansprüche, **dadurch gekennzeichnet, dass** die Abstrahlöffnung (10) mit einer lichtdurchlässigen Abdeckung versehen ist.

## Claims

1. A surface luminaire with a luminous chamber (1) in the form of a hollow fiberoptic conductor with an emission opening (10), a peripheral frame (11), a base plate (12) and sloping faces (13) which bridge the edge region of the base plate (12) and a region of the peripheral frame (11) which adjoins the base plate (12) and which form a cavity (14) in which control electronics are arranged, wherein the control electronics drive light-emitting diodes (2) which are arranged on the base plate (12) and which are designed and/or are arranged on the base plate (12) in such a way that the maximum of the light emitted by the light-emitting diodes (2) is directed parallel to the base plate (12) or is emitted at an acute angle with respect to the base plate (12).

2. The surface luminaire as claimed in claim 1, **characterized in that** the luminous chamber (1) is in the form of a diffusely reflecting hollow fiberoptic conductor.

3. The surface luminaire as claimed in claim 1 or 2, **characterized in that** the light-emitting diodes (2) comprise side-emitting LEDs.

4. The surface luminaire as claimed in at least one of the preceding claims, **characterized in that** the sloping faces (13) are curved concavely or convexly.

5. The surface luminaire as claimed in at least one of the preceding claims, **characterized in that** the sloping faces (13) are ribbed or folded.

6. The surface luminaire as claimed in at least one of the preceding claims, **characterized in that** the base plate (12) contains a thermally conducting board (3) or is connected to a thermally conducting board (3).

7. The surface luminaire as claimed in claim 6, **characterized in that** the thermally conducting board (3) is at least thermally connected to a heat sink (5).

8. The surface luminaire as claimed in claim 6 or 7, **characterized in that** the thermally conducting board comprises a metal core or ceramic board (3).

9. The surface luminaire as claimed in at least one of the preceding claims 1 to 5, **characterized in that** the base plate (12) comprises a printed circuit board (4), in which apertures (40) are arranged beneath the light-emitting diodes (2).

10. The surface luminaire as claimed in claim 9, **characterized in that** parts (61) of a heat sink (6) which are thermally conductively connected to the base or cooling faces (22) of the light-emitting diodes (2) protrude through the apertures (40).

11. The surface luminaire as claimed in claim 9, **characterized in that** depressions (72) are arranged in the face (71), which faces the light-emitting diodes (2), of the heat sink (7), into which depressions (72) bolts (8) are inserted and are thermally conductively connected to the base or the cooling face (22) of the light-emitting diodes (2).

12. The surface luminaire as claimed in claim 11, **characterized in that** the bolts (8) are pressed into the depressions (72) of the heat sink (7).

13. The surface luminaire as claimed in claim 11 or 12, **characterized in that** the bolts (8) comprise metal, preferably a metal with a higher thermal conductivity than aluminum, in particular copper.

14. The surface luminaire as claimed in at least one of the preceding claims 6 to 13, **characterized in that** an electrically insulating, highly thermally conductive layer (9) is arranged between the board (3) and the heat sink (5) or between the cooling faces (22) of the light-emitting diodes (2) and the parts (61) of the heat sink (6) which protrude through the apertures (40), or the bolts (8).

15. The surface luminaire as claimed in claim 14, **characterized in that** the electrically insulating, highly thermally conductive layer (9) comprises an electrically insulating thermally conductive adhesive or a thermally conductive pad.

16. The surface luminaire as claimed in claim 14, **characterized in that** the electrically insulating, highly thermally conductive layer (9) comprises a sprayed-on, vapor-deposited or printed-on electrical insulating layer.

17. The surface luminaire as claimed in at least one of the preceding claims 11 to 13, **characterized in that** the bolts (8) comprise thermally conductive, electrically insulating ceramic.

18. The surface luminaire as claimed in at least one of the preceding claims 10 to 17, **characterized in that** a number of bolts (8) or parts (61) of one or more heat sinks (6) which corresponds to the number of light-emitting diodes (2) protrude through the apertures (40).

19. The surface luminaire as claimed in at least one of the preceding claims, **characterized in that** the emission opening (10) is provided with a light-permeable cover.

## Revendications

1. Luminaire de surface comprenant une chambre d'éclairage (1) réalisée sous la forme d'un guide de lumière creux, pourvue d'une ouverture de rayonnement (10), d'un cadre (11) périphérique, d'une plaque de fond (12) et de surfaces obliques (13), qui surmontent la zone de bordure de la plaque de fond (12) et une zone, jouxtant la plaque de fond (12), du cadre (11) périphérique et qui réalisent un espace creux (14), dans lequel un système électronique de commande est disposé, qui pilote des diodes électroluminescentes (2) disposées sur la plaque de fond (12), lesquelles sont réalisées de telle manière et/ou disposées sur la plaque de fond (12) de telle manière que le maximum de la lumière rayonnée par les diodes électroluminescentes (2) est orienté de manière parallèle par rapport à la plaque de fond (12) ou est émise selon un angle aigu par rapport à la plaque de fond (12).

2. Luminaire de surface selon la revendication 1, **caractérisé en ce que** la chambre d'éclairage (1) est réalisée sous la forme d'un guide de lumière creux à réfléchissement diffus.

3. Luminaire de surface selon la revendication 1 ou 2, **caractérisé en ce que** les diodes électroluminescentes (2) sont constituées de DEL à émission latérale.

4. Luminaire de surface selon au moins l'une quelconque des revendications précédentes, **caractérisé en ce que** les surfaces obliques (13) sont bombées de manière concave ou de manière convexe.

5. Luminaire de surface selon au moins l'une quelconque des revendications précédentes, **caractérisé en ce que** les surfaces obliques (13) sont nervurées ou pliées.

6. Luminaire de surface selon au moins l'une quelconque des revendications précédentes, **caractérisé en ce que** la plaque de fond (12) contient une platine (3) conduisant la chaleur ou est reliée à une platine (3) conduisant la chaleur.

7. Luminaire de surface selon la revendication 6, **caractérisé en ce que** la platine (3) conduisant la chaleur est reliée au moins de manière thermique à un corps de refroidissement (5).

8. Luminaire de surface selon la revendication 6 ou 7, **caractérisé en ce que** la platine conduisant la chaleur est constituée d'une partie centrale en métal ou d'une carte en céramique (3).

9. Luminaire de surface selon au moins l'une quelconque des revendications précédentes 1 à 5, **caractérisé en ce que** la plaque de fond (12) est constituée d'une carte de circuits imprimés (4), dans laquelle sont disposés des ajours (40) sous les diodes électroluminescentes (2).

10. Luminaire de surface selon la revendication 9, **caractérisé en ce que** des parties (61) d'un corps de refroidissement (6) dépassent par les ajours (40), lesquelles parties sont reliées de manière à conduire la chaleur au fond ou aux surfaces de refroidissement (22) des diodes électroluminescentes (2).

11. Luminaire de surface selon la revendication 9, **caractérisé en ce que** sont disposés, dans la surface (71), tournée vers les diodes électroluminescentes (2), du corps de refroidissement (7), des renfoncements (72), dans lesquels des boulons (8) sont insérés et sont reliés, de manière à conduire la chaleur, au fond ou à la surface de refroidissement (22) des diodes électroluminescentes (2).

12. Luminaire de surface selon la revendication 11, **caractérisé en ce que** les boulons (8) sont enfoncés dans les renfoncements (72) du corps de refroidissement (7).

13. Luminaire de surface selon la revendication 11 ou 12, **caractérisé en ce que** les boulons (8) sont constitués de métal, de préférence d'un métal présentant une conductivité thermique plus élevée que l'aluminium, sont constitués en particulier de cuivre.

14. Luminaire de surface selon au moins l'une quelconque des revendications précédentes 6 à 13, **caractérisé en ce qu'**une couche (9) à isolation électrique, à conduction thermique satisfaisante est disposée entre la platine (3) et le corps de refroidissement (5) ou entre les surfaces de refroidissement (22) des diodes électroluminescentes (2) et les parties (61), dépassant par les ajours (40), du corps de refroidissement (6) ou les boulons (8).

15. Luminaire de surface selon la revendication 14, **caractérisé en ce que** la couche (9) à isolation électrique, à conductivité thermique satisfaisante est constituée d'une colle thermoconductrice à isolation électrique ou d'un coussin thermoconducteur.

16. Luminaire de surface selon la revendication 14, **caractérisé en ce que** la couche (9) à isolation électrique, à conductivité électrique satisfaisante est constituée d'une couche isolante électrique appliquée par pulvérisation, en phase vapeur ou par impression.

17. Luminaire de surface selon au moins l'une quelconque des revendications précédentes 11 à 13, **caractérisé en ce que** les boulons (8) sont constitués d'une céramique conduisant la chaleur, à isolation électrique.

18. Luminaire de surface selon au moins l'une quelconque des revendications précédentes 10 à 17, **caractérisé en ce qu'**un nombre de boulons (8) ou de parties (61) d'une ou de plusieurs corps de refroidissement (6), lequel nombre correspond au nombre des diodes électroluminescentes (2) dépassent par les ajours (40).

19. Luminaire de surface selon au moins l'une quelconque des revendications précédentes, **caractérisé en ce que** l'ouverture de rayonnement (10) est dotée d'un recouvrement laissant passer la lumière.
